# EUROPEAN PATENT APPLICATION

(11) **EP 4 742 178 A1**
(43) Date of publication of application: **13.05.2026**
(21) Application number: 24212292.7
(22) Date of filing: 12.11.2024
(51) Int. Cl.: G06V 10/74, G06V 10/778, G06V 10/94, G06V 40/10

(54) **TOOTH LOCALIZATION**

(71) Applicant: Koninklijke Philips N.V., 5656 AG Eindhoven (NL)
(72) Inventor: VLUTTERS, Ruud, Eindhoven (NL); GALLUCCI, Alessio, Eindhoven (NL)
(74) Representative: Philips Intellectual Property & Standards

(57) **Abstract**

Proposed concepts aim to provide schemes, solutions, concepts, designs, methods, and systems pertaining to tooth localization and identification in dental imaging. In particular, embodiments aim to provide accurate and robust methods for matching tooth images from routine scans to reference images from calibration scans, enabling reliable tooth identification and localization without requiring a highly accurate universal tooth classification model.

## Description

### FIELD OF THE INVENTION

The present invention relates to the field of oral care, and in particular the field of tooth localization in dental imaging.

### BACKGROUND OF THE INVENTION

Dental imaging and analysis have become increasingly important tools in oral healthcare, allowing for early detection and monitoring of various dental conditions. Traditional methods of dental examination rely heavily on visual inspection by dental professionals, which can be subjective and may miss subtle changes or early signs of oral issues. Advanced imaging technologies, such as intraoral cameras/scanners and fluorescence-based systems, have emerged to provide more detailed and objective information about oral health.

One significant challenge in the field of dental imaging is the accurate identification and localization of individual teeth within captured images or scans. This task is important for proper diagnosis, treatment planning, and monitoring of dental conditions. However, the wide variety of tooth shapes, sizes, and arrangements among individuals makes it difficult to develop a universal system for tooth identification that works reliably across diverse populations.

Furthermore, the dynamic nature of the oral environment, including factors such as tooth movement, tooth colour, relative camera pose and/or position, dental work, changes in teeth condition and/or presence, orthodontics conditions, and changes in oral hygiene, can complicate the consistent identification of teeth across multiple imaging sessions. This poses a particular challenge for longitudinal monitoring of oral health, where it is essential to track changes in specific teeth over time.

### SUMMARY OF THE INVENTION

The invention is defined by the claims.

According to an aspect of the invention, there is provided a method for tooth localization. The method comprises: obtaining a set of reference images of the subject's teeth, each reference image comprising an image of a respective tooth of the subject at a known tooth location; obtaining a set of scan images of the subject's teeth, the scan images being captured during performance of an oral scanning routine on the subject, and each scan image comprising an image of a respective tooth of the subject; calculating measures of similarity of set of the scan images with the set of reference images; and identifying a tooth of a scan image based on the calculated measures of similarity.

This may, for example, allow for automated and accurate localization and identification of a teeth in dental images.

Proposed concepts thus aim to provide schemes, solutions, concepts, designs, methods, and systems pertaining to tooth localization and identification in dental imaging. In particular, embodiments aim to provide accurate and robust methods for matching tooth images from routine scans to reference images from calibration scans, enabling reliable tooth identification and localization without requiring a highly accurate universal tooth classification model.

Embodiments leverage the idea that while teeth vary widely across individuals, an individual's teeth remain relatively consistent over time. By using a personalized set of reference images obtained through a guided calibration scan, embodiments may more accurately identify and localize teeth in subsequent routine scans. This may be particularly advantageous for dealing with variations in tooth appearance, dental work, and common orthodontic issues that may pose challenges for traditional tooth classification/identification methods.

Furthermore, by incorporating the proposed concept(s) into oral care devices with integrated imaging capabilities, such as Intra-Oral Scanners, embodiments may enable a comprehensive approach to oral health monitoring and personalized care. Such integration may allow for regular, convenient scanning and analysis of teeth, potentially leading to earlier detection of dental issues and more effective preventive care strategies.

Overall, the proposals may address a significant challenge in dental imaging and analysis, offering a practical concept that has the potential to improve and/or personalize oral healthcare outcomes for a wide range of individuals.

Embodiments may enable accurate tooth identification and localization without requiring a highly accurate universal tooth classification model (which is very difficult to build), making it more robust to variations in tooth appearance across individuals.

The method may further comprise performing a calibration scan of the subject's teeth to obtain a set of reference images of the subject's teeth and/or oral surface(s) (e.g. a combination of the teeth (number) and the surface (lingual=inner, facial/buccal=outer, occlusal=chewing)). Performing a calibration scan allows for the creation of a personalized reference set of tooth images for each subject, helping to improve the accuracy of subsequent tooth identification.

The calibration scan may be performed with guidance to obtain reference images of each tooth of the subject with known locations. Guided calibration scanning ensures that high-quality, trusted reference images are obtained for each tooth at known guidance locations, enhancing the reliability of subsequent matching. Nonetheless, embodiments may also be adapted to cater for calibration scans that are not performed with any guidance (e.g, performed without guidance by a consumer or end user).

The oral scanning routine may be performed without guidance. Allowing routine scans to be performed without guidance may help to improve user convenience and may increase the likelihood of regular use. However, in some embodiments, some guidance may be provided for the oral scanning routine, but less than that provided for a calibration scan. That is, guidance for the oral scanning routine may of a reduced level (compared to the guidance for a calibration scan). Simply by way of example, calibration scans may be performed with maximum guidance, whereas routine scans may be performed with minimal guidance.

The method may further comprise using an artificial intelligence (Al) model to map tooth images from the reference images and the scan images to embedding vectors, and calculating similarity scores between the embedding vectors of the reference images and the scan images. Using an AI model to generate embedding vectors allows for efficient and accurate comparison of tooth images, improving the overall performance of the tooth localization method.

The method may further comprise using a Hungarian algorithm to match scan images to reference images based on the calculated similarity scores. The Hungarian algorithm provides an optimal matching solution, maximizing the overall similarity between scan images and reference images and further improving localization accuracy.

The AI model may be trained using a self-supervised method to measure similarity between tooth images. Self-supervised training allows the AI model to learn relevant features or representations/embeddings for tooth comparison without requiring extensive manually labeled data, making the system more adaptable to different tooth appearances. Also, the AI model may be trained to have a better embedding space e.g. to have more significant and characteristic embeddings.

In another embodiments, one may employ teeth instance segmentation to extract a single tooth from an image where multiple teeth are present, or to select an image from a sequence of images where a single tooth is centred in the image. This, in turn, may make the features/representations more effective for a specific tooth.

The self-supervised method may comprise a Siamese learning procedure with a contrastive loss function. The Siamese learning procedure with contrastive loss is particularly well-suited for learning similarity measures between images, further enhancing the AI model's ability to accurately compare tooth images.

The use of artificial intelligence, particularly self-supervised learning techniques, to generate embedding vectors for tooth images allows for efficient and accurate comparison between reference and scan images. Such an AI-driven approach, combined with optimal matching algorithms like the Hungarian algorithm, provides a powerful and efficient solution for tooth localization that can adapt to individual variations and improve over time.

At least one of: the set of reference images; and the set of scan images may be acquired by an oral care device having an image capture device adapted to capture images of one or more oral features of the subject. Using a dedicated oral care device with an integrated image capture device ensures consistent and high-quality tooth images, improving the reliability of the tooth localization method. Also, embodiments may even use different image modalities in the reference images and the scan images, e.g. white light reference images and Quantitative Light-induced Fluorescence (QLF) based scan images.

According to another aspect of the invention, there is provided a computer program product for tooth localization is provided. The computer program product comprises a computer-readable storage medium having program instructions embodied therewith, the program instructions executable by a processor to cause the processor to perform a method comprising: obtaining a set of reference images of the subject's teeth, each reference image comprising an image of a respective tooth of the subject at a known tooth location; obtaining a set of scan images of the subject's teeth, the scan images being captured during performance of an oral scanning routine on the subject, and each scan image comprising an image of a respective tooth of the subject; calculating measures of similarity of set of the scan images with the set of reference images; and identifying a tooth of a scan image based on the calculated measures of similarity.

Such a computer program product may enable the implementation of the tooth localization method on various computing devices, allowing for widespread adoption and use of the proposed concept(s).

Such a computer program product may enable the implementation of the intelligent image capture control method in software, allowing for easy updates and customization of the system's behaviour.

According to another aspect of the invention, there is provided a system for tooth localization. The system comprises: an interface configured to obtain a set of reference images of the subject's teeth, each reference image comprising an image of a respective tooth of the subject at a known tooth location, and to obtain a set of scan images of the subject's teeth, the scan images being captured during performance of an oral scanning routine on the subject, and each scan image comprising an image of a respective tooth of the subject; a processor arrangement configured to calculate measures of similarity of set of the scan images with the set of reference images; and a controller configured to generate a signal identifying a tooth of a scan image based on the calculated measures of similarity.

This system provides a comprehensive hardware and software solution for implementing the tooth localization method, enabling efficient and accurate tooth identification in various dental applications.

The interface may comprise an image capture device adapted to capture images of one or more oral features of the subject. Integrating an image capture device directly into the system ensures compatibility and optimized performance for capturing high-quality tooth images.

The processor arrangement may be configured to use an artificial intelligence (AI) model to map tooth images from the reference images and the scan images to embedding vectors, and to calculate similarity scores between the embedding vectors of the reference images and the scan images. Implementing the AI model directly in the system's processor arrangement allows for fast and efficient tooth image comparison, improving the overall speed and performance of the tooth localization process.

The AI model may be trained using a self-supervised method to measure similarity between tooth images. Using a self-supervised training method for the AI model allows the system to adapt to different tooth appearances without requiring extensive manually labelled training data.

The system may be incorporated into an oral care device comprising an image capture device adapted to capture images of one or more oral features of a user, and optionally wherein the oral care device comprises an Intra-Oral Scanner. Integrating the tooth localization system into an oral care device with an Intra-Oral Scanner creates a comprehensive solution for dental imaging and analysis, enabling advanced oral health monitoring and personalized care recommendations.

Embodiments may be of particular relevance to oral care devices having an image capture device (e.g. digital camera), such as Intra-Oral Scanners (IOSs), dental/oral cameras and electric toothbrushes for example. Thus, according to another aspect of the invention, there may be provided an oral care device having: an image capture device adapted to capture images of one or more oral features of a user; and a system according to a proposed embodiment, and optionally wherein the oral care device comprises an Intra-Oral Scanner.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 illustrates a flowchart of a method for tooth localization, according to aspects of the present disclosure.
FIG. 2 illustrates a block diagram of a system for tooth localization, according to an embodiment.
FIG. 3 illustrates a side view of an oral care device integrated with the system of FIG. 2, according to aspects of the present disclosure.
FIG. 4 illustrates a block diagram of a computing system, in accordance with example embodiments.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.
It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to assessing an oral health care routine of a user. According to proposed concepts, a number of possible solutions may be implemented separately or jointly. That is, although these possible solutions may be described below separately, two or more of these possible solutions may be implemented in one combination or another.

The invention proposes concepts for tooth localization that leverage the use of reference images obtained from an initial calibration scan. This allows for the accurate identification and localization of individual teeth in subsequent routine scans. The calibration scan, which may (or may not) be performed with user guidance, provides a set of reference images for each tooth at known locations. These reference images serve as a personalized 'ground truth' for each user, against which images from routine scans can be compared.

The proposed concepts offer a robust and efficient solution for tooth localization that does not rely on a universal tooth classification model. Instead, it capitalizes on the relative consistency of an individual's teeth over time, allowing for accurate tooth identification even in the face of variations in tooth appearance, dental work, and/or common orthodontic issues. This may be particularly advantageous for longitudinal monitoring of oral health, where it is essential to track changes in specific teeth or oral features over time.

Embodiments may employ an AI model to map tooth images from both the reference and routine scans to high-dimensional embedding vectors. Measures of similarity between these vectors can then be calculated, providing a basis for matching routine scan images to reference images. Further, the matching process may be optimized using an algorithm such as the Hungarian algorithm, which finds the optimal one-to-one match between images from the two sets.

Embodiments may be implemented in an oral care device equipped with an image capture device, such as an intraoral scanner, thus enabling regular, convenient scanning and analysis of teeth. Such integration may lead to earlier detection of dental issues and more effective preventive care strategies. Proposed embodiments may therefore provide a practical and adaptable solution for tooth localization in dental imaging, with the potential to improve oral healthcare outcomes for a wide range of individuals.

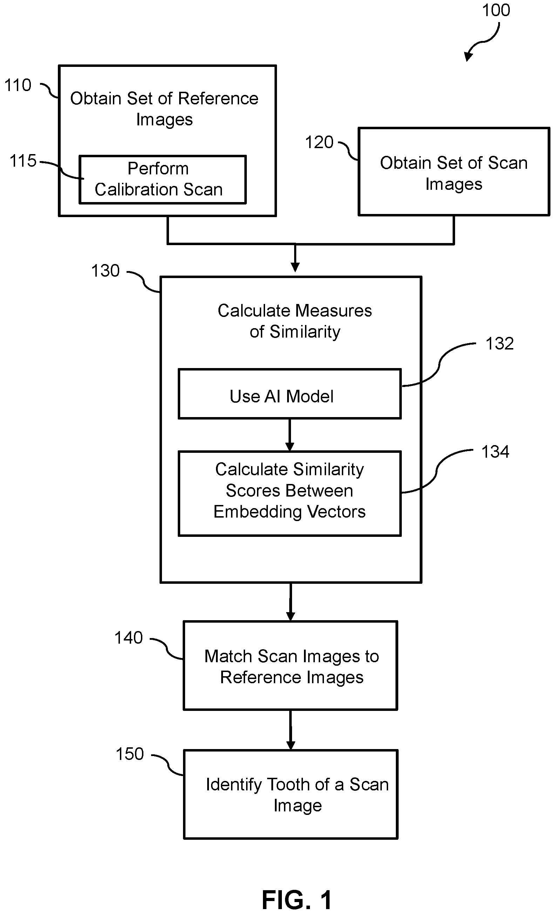

Referring now to Fig. 1, there is depicted a flow diagram of a method 100 for tooth localization according to a proposed embodiment. The flow diagram depicts a sequential process where each step leads to the next, showing how the method 100 progresses from data collection to analysis and tooth identification.

The method 100 begins with step 110, where a set of reference images is obtained. Each reference image in this set comprises an image of a respective tooth of the subject at a known tooth location. This known location is determined through the use of a calibration scan performed with user guidance, as depicted in step 115.

The calibration scan may involve the use of an oral imaging device, such as an intraoral scanner, to capture images of each tooth in the subject's mouth. The oral imaging device is adapted to capture images of one or more oral features of the subject, including the teeth. The images captured during the calibration scan may be stored and used as reference images for subsequent routine scans.

The position of each tooth during the calibration scan may be defined using a floating point number and categorical labels. The floating point number may describe the position of the tooth along the jaw, with -1.0 representing the left molar and 1.0 representing the right molar - this may assist with outlier cases, for example. The categorical labels may describe the tooth surface (inner/lingual, outer/buccal), jaw (upper/maxillary, lower/mandibular) and the tooth number according to a typical tooth numbering system (like iso3950). It may be these recorded locations that can be used to display findings in routine scans, which are matched to the images from the calibration scan.

The user guidance involves instructions provided through an application or other user interface, directing the user on how to position and move the oral imaging device to capture images of each tooth at the correct location. For example, the guidance provided during the calibration scan may include audio and text messages to instruct the user on how to position the camera and move it over the teeth. The guidance may also include instructions on when to change the scanning direction and when to flip the camera handle to switch from capturing images of the upper teeth to the lower teeth, or from the outer surface of the teeth to the inner surface. Such guidance may help to ensure that each tooth is accurately captured and its location is correctly identified.

By way of further example, the calibration scan may be performed with the aid of a user interface displayed in an app. The user interface may provide visual guidance to the user on how to move the camera over the teeth during the calibration scan. The user interface may also display the recorded location of each tooth during the calibration scan, providing a visual reference for the user. Guidance may alternatively (or additionally) be provided in the form of Virtual Reality or Augmented Reality (e.g. via a phone app, an external device and/or in conjunction with a scanner or toothbrush monitor/screen).

In some cases, the calibration scan may be performed under different lighting conditions to capture different aspects of the teeth. For instance, the calibration scan may be performed under white light illumination to capture detailed images of the teeth, and under Quantitative Light-induced Fluorescence (QLF) illumination to capture images of the auto-fluorescence of plaque on the teeth. The images captured under these different lighting conditions may be used as reference images for subsequent routine scans.

The result of the calibration scan is a set of reference images, each image representing a respective tooth of the subject at a known tooth location.

Step 120 involves obtaining a set of scan images of the subject's teeth. These scan images are captured during the performance of an oral scanning routine on the subject. Each scan image in this set comprises an image of a respective tooth of the subject. The oral scanning routine may be performed without additional user guidance (or with minimal or reduced guidance), allowing the subject to perform the routine at their convenience, such as during their regular oral care routine. This routine scanning process may be performed at regular intervals, such as daily, weekly, or monthly, to monitor the subject's oral health over time.

In some cases, the oral scanning routine may be performed using the same oral care device that was used to perform the calibration scan. Thus, the same user interface used for providing guidance for the calibration scan may be employed to provide guidance (if any) for the oral scanning routine.

A routine scan (i.e. performance of an oral scanning routine on the subject) results in a set of scan images, each image representing a respective tooth of the subject. The images captured during the routine scan may be stored and used for comparison with the reference images obtained during the calibration scan.

Following the acquisition of the reference and scan images, the method 100 proceeds to step 130, which involves calculating measures of similarity between the set of scan images and the set of reference images. Here, this entails two sub-steps, step 132 and 134.

More specifically, the calculation is performed using an AI model, as depicted in step 132. The AI model may be trained to map tooth images from the reference images and the scan images to high-dimensional embedding vectors. These embedding vectors represent the features of each tooth image in a form that can be compared to measure similarity.

Step 134 involves calculating similarity scores between the embedding vectors of the reference images and the scan images. These similarity scores provide a measure of how similar each scan image is to each reference image. The similarity scores may be calculated using various methods, such as by taking the inner product between the embedding vectors or calculating the distance between the vectors.

By way of example, the AI model may be trained using a self-supervised method, such as SimCLR, which is designed to measure the similarity between two images of the same tooth. The AI model may map each tooth image to an embedding vector, where the similarity between two images can be calculated by taking the normalized inner product between the corresponding embedding vectors. The higher the inner product, the more similar are the images. Alternatively, the distance between the vectors may be calculated, with smaller distances indicating greater similarity between the images.

In some cases, the AI model may be trained using a dataset collected from an internal user study. The dataset may include images corresponding to each tooth of each participant, including or excluding the wisdom teeth. The AI model may be trained to map these tooth images to embedding vectors and calculate similarity scores between these vectors. The similarity scores may be used to measure the similarity between a set of tooth images taken during the calibration scanning phase and a set of tooth images taken during routine scanning.

In some aspects, the AI model may use an encoder and a classifier to map an input image into features or embedding vectors, which are then fed to the classifier to output the probabilities of the classes. Thus, the embedding vectors, or any other features that get calculated by the embedding AI model may be used as input to the classifier. This classifier can, for example, predict the iso tooth numbers and/or tooth surface. The encoder may be based on the EfficientNet-BO model, which may pretrained on the ImageNet dataset for example (although it may be pre-trained on any other suitable dataset, e.g. COCO, or not pre-trained). The output of the EfficientNet feature layer provides feature maps with multiple channels for each image. These feature maps may be average pooled and a simple linear classifier may be applied to classify the image into the classes of the problem, such as the number of teeth in the ISO 3950 tooth enumeration system or the inner versus outer surface of the tooth.

The AI model may be trained using a Siamese learning procedure with a contrastive loss function. This procedure involves randomly sampling pairs of images belonging to the same subject, tooth number, and surface combination. These images are then augmented using the same augmentation routines as applied when training image classification models. It is noted, however, that the augmentations domain can vary depending on the application and the needs. Also, it does not need to be the same as used in training of image classifier. The AI model is trained to map each image to an embedding vector, where the similarity between the two views of the same tooth is closer than with any of the other images in the minibatch. This training process results in a strong tooth re-identification performance, allowing for accurate tooth localization in subsequent scans.

Following the calculation of similarity measures, the method 100 moves to step 140, where scan images are matched to reference images based on the calculated similarity measures. This matching process may involve using an algorithm, such as the Hungarian algorithm, to find the optimal one-to-one match between the images from the two sets. This matching process allows each scan image to be associated with a specific reference image, and thus a specific tooth at a known location.

The Hungarian algorithm, also known as the linear sum assignment algorithm, is designed to find the optimal one-to-one match between two sets of items based on a given cost matrix. In the context of this method, the cost matrix may be a similarity matrix constructed between all images in the set of reference images (rows) and all images in the set of scan images (columns). The Hungarian algorithm may be applied to this similarity matrix to find the optimal match between the images from the set of scan images and the set of reference images. This optimal match may be determined as the match that maximizes the sum of similarity scores over the complete matching procedure.

In some cases, before applying the Hungarian algorithm, duplicate images from the same tooth or tooth surface may be removed from the set of scan images. This removal process may be performed by comparing the embedding vectors of the scan images. If the similarity score between two scan images exceeds a certain threshold, such as 0.98 for example, the two images may be considered as duplicates of each other (over all of the found pairs), and one of them may be removed from the set of scan images. Exact copies will return 1.00, while lower values (e.g. 0.98) might indicate a very similar matching pair (e.g. the image has been captured after a very short time instance) but not the same. The exact threshold value used for this purpose may thus vary depending on the specific needs or circumstances. By removing duplicate images before applying the Hungarian algorithm, the method may ensure that each tooth or tooth surface is represented by a unique image in the set of scan images, thereby improving the accuracy and reliability of the matching process.

In some aspects, the Hungarian algorithm may be used to determine for each image from the routine scan (set B) which image from the calibration scan (set A) it belongs to. Since the location in the mouth of the calibration images is known, the plaque findings or similar oral reports (based on the images in set B) can be reported at the correct location in the mouth. This approach may provide a robust and accurate method for tooth localization in dental imaging, potentially improving the monitoring and reporting of oral health conditions.

The final step in the method 100 is step 150, which involves identifying the tooth of a scan image based on the matching performed in the previous step. This identification allows the location of each tooth in the scan images to be determined based on the known locations of the teeth in the reference images.

Thus, the proposed embodiment of Fig. 1 allows for accurate tooth localization in routine scans, enabling findings such as plaque or other oral health issues to be reported at the correct tooth locations.

By way of demonstration, the inventors have implemented a simple Siamese learning procedure with the same contrastive loss function as used in CLIP. Both white light and QLF images from a Smart Sensing Phase 1 study were used. A demonstration dataset class was implemented that randomly samples pairs of images belonging to the same subject, tooth number, surface combination. Additionally, these images were augmented using the same augmentation routines as applied when training image classification models.

An EfficientNet B0 based AI model was used to which a single linear layer was added to map the EfficientNet features to a 64-dimensional embedding vector. Using a batch size of 32, a very smooth training process was observed.

To evaluate the quality of the calculated similarity scores and demonstrate technical effect of the proposed concept(s), a dedicated evaluation script was built to replicate a practical use case where images belonging to the same user/subject are matched. In the dataset, two sets of teeth images for each user are available, one set of images with white light illumination, used as calibration scan, and another set of images with QLF, used as a routine scan. In this case, a similarity matrix is calculated where each row corresponds to a white light image, and each column to a QLF image. This specific choice is due to the limited dataset, but in practice both sets can be of either white light or QLF (or a combination / mixture).

For each row, the column with the highest similarity is determined. Using the trained model Sim_20231215A7, a mean re-identification accuracy of 92% was obtained on the validation split, and a re-identification accuracy of 94% on the test split.

To ensure the proper model training and evaluation, the training, validation, and test datasets are stratified according to the participants.

When looking in more detail at the type of errors made during the matching, one it is seen that most errors are due to doubly allocating a specific QLF image to multiple white light images. This is due to the simple matching routine, that naively takes the most similar QLF image (column) without taking into account that another white light image (row) might have an even higher similarity with that QLF image.

By seeing the matching problem as an assignment problem, one can apply the Hungarian algorithm or the linear sum assignment algorithm to reach an optimal solution. In this case, the maximum sum of similarity scores over the complete matching procedure is determined. When using this algorithm to solve the matching between the 2 sets of images (set A = white light images, set B = QLF images), an accuracy of 99% on the validation split and 100% on the test split is observed.

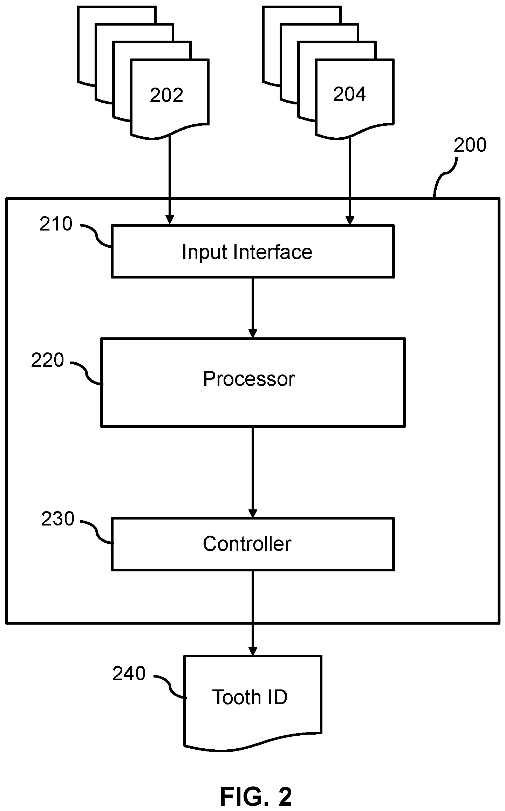

Referring now to Fig. 2, there is depicted a block diagram of a system 200 for tooth localization according to an embodiment of the invention. The system 200 comprises several components that work together to process dental images and identify teeth. The system 200 includes an input interface 210, a processor 220, and a controller 230. These components are communicatively coupled via a local interface (not shown), which may include additional elements such as controllers, buffers, drivers, repeaters, and receivers to enable communications.

The input interface 210 serves as the entry point for image data into the system 200. Here, the input interface 210 is configured to obtain a set of reference images 202 of the subject's teeth, each reference image comprising an image of a respective tooth of the subject at a known tooth location. The interface is also configured to obtain a set of scan images 204 of the subject's teeth. These scan images 204 are captured during the performance of an oral scanning routine on the subject (e.g. a routine oral scan), and each scan image 204 comprises an image of a respective tooth of the subject.

The processor 220 is a hardware device for executing software that can be stored in a memory (not shown). The processor 220 receives the image data (202 and 204) from the input interface 210 and performs the necessary computations and analysis on the images. The processor may, for example, include one or more processors, such as a central processing unit (CPU), a graphics processing unit (GPU), or a combination thereof.

Here, the processor 220 is configured to use an AI model to map tooth images from the reference images 202 and the scan images 204 to high-dimensional embedding vectors. These embedding vectors represent the features of each tooth image in a form that can be compared to measure similarity.

By way of example, the AI model within the processor 220 may be trained using a dataset collected from an internal user study or other suitable sources. The dataset may include images corresponding to each tooth of multiple participants, providing a diverse range of tooth shapes and appearances for the AI model to learn from. This training process allows the AI model to effectively measure similarity between tooth images, even in the face of variations in tooth appearance across individuals.

The processor 220 is further configured to calculate similarity scores between the embedding vectors of the reference images 202 and the scan images 204. These similarity scores provide a measure of how similar each scan image is to each reference image. The similarity scores may be calculated using various methods, such as by taking the inner product between the embedding vectors or calculating the distance between the vectors. The processor 220 is configured to perform these calculations and generate the similarity scores, which are then used to match scan images to reference images based on the calculated similarity measures.

The controller 230 manages the overall operation of the system 200, coordinating the functions of the other components and controlling the flow of data and processing. In particular, the controller 230 is configured to generate a signal identifying a tooth of a scan image based on the calculated measures of similarity. The controller 230 is configured to identify a tooth in a scan image by finding the reference image with the highest similarity score to the scan image. In this example, the controller 230 does this by comparing the similarity scores of the scan image with the similarity scores of all the reference images and selecting the reference image with the highest similarity score. The identified tooth in the scan image is then considered to be the same as the tooth in the selected reference image.

The controller 230 is further configured to generate a signal identifying a tooth of a scan image based on the calculated measures of similarity. This signal may be used to indicate the identified tooth in the scan image, providing valuable information about the location and condition of the tooth. The signal may, for example, be a digital signal, an analog signal, or any other type of signal suitable for conveying information about the identified tooth.

Further, in some instance, the controller 230 may be configured to generate multiple signals identifying multiple teeth in a scan image based on the calculated measures of similarity. Each signal may correspond to a different tooth in the scan image, allowing for the identification of multiple teeth in a single scan image. This may be particularly beneficial in situations where multiple teeth need to be monitored or assessed, such as in the case of a comprehensive oral health assessment.

Yet further, the controller 230 may be configured to generate a visual representation of the identified tooth based on the generated signal. This visual representation may be displayed on a display device, such as a screen of a smartphone, a tablet, a computer, or any other suitable display device. The visual representation may include a graphical representation of the identified tooth, a textual description of the identified tooth, or any other suitable representation of the identified tooth.

By way of yet further example, the controller 230 may generate additional information about the identified tooth based on the generated signal. This additional information may include information about the condition of the identified tooth, such as the presence of plaque or tartar, the condition of the tooth enamel, or any other relevant information about the tooth. This additional information may be displayed along with the visual representation of the identified tooth, providing the user with comprehensive information about their oral health.

The tooth identification output 240 thus allows for accurate tooth localization in routine scans, enabling findings such as plaque or other oral health issues to be reported at the correct tooth locations.

Variations to the features detailed above for the embodiment of Fig. 2 may be employed.

For example, in some cases, the input interface 210 may actually comprise/include an image capture device adapted to capture images of one or more oral features of the subject. This image capture device may be part of an oral care device, such as an intra-oral scanner. The image capture device may be adapted to capture images of the subject's teeth under different lighting conditions, such as white light illumination, Quantitative Light-induced Fluorescence (QLF) illumination, or Fluorescence Imaging with Reflectance Enhancement (FIRE) illumination. The images captured by the image capture device may be used as reference images or scan images, depending on its use by a user and/or the specific requirements of the tooth localization process.

In some example implementations, the processor 220 may be configured to perform additional processing tasks, such as image preprocessing, image segmentation, and image classification. The processor 220 may also be configured to perform other tasks related to oral health care, such as plaque detection, tartar detection, and caries detection. These additional tasks may be performed using the same AI model or different AI models, depending on the specific requirements of the tasks.

The processor 220 may be configured to perform the mapping and similarity calculation tasks in real-time or near real-time. This may allow for immediate feedback to the user during the oral scanning routine, potentially improving the user's oral care routine and overall oral health. In other cases, the processor 220 may perform these tasks in a batch mode, processing multiple images at once and providing the results at a later time. This may be beneficial in situations where real-time feedback is not necessary or where processing resources are limited.

Some embodiments might recognize multiple teeth instances in the same image and crop them out creating a set of images with one tooth each. Such object recognition model can be built with YOLO-v8 or any other opensource alternative such as MMdetection.

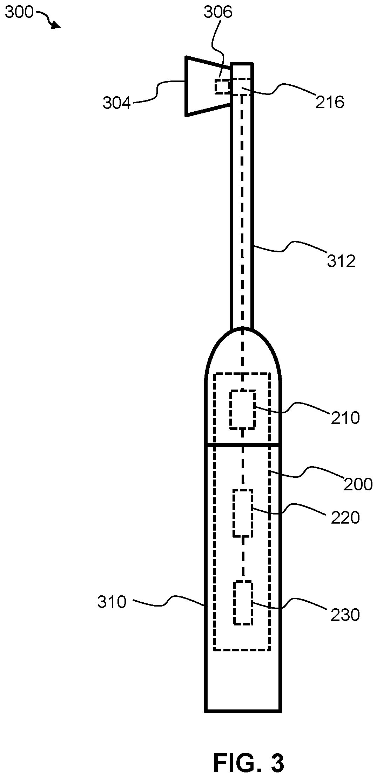

Fig. 3 illustrates a side view of an oral care device 300 incorporating the system 200 of Fig. 2. The oral care device 300 is an intraoral scanner which comprises a handle section 310 atop which is an elongated arm 312.

At the distal end of the arm is a conical section 304 which houses an image capture device 306. Th image capture device 306 is adapted to capture high-resolution images of the subject's teeth during the performance of an oral care routine. The Intra-Oral Scanner 300 is thus configured to capture images of one or more oral features of the subject, enabling the acquisition of both reference and scan images.

The Intra-Oral Scanner 300 provides several benefits for tooth localization and oral health monitoring. Firstly, it allows for the capture of high-quality images of the subject's teeth, which can enhance the accuracy of the tooth localization process. Secondly, it enables regular, convenient scanning of the subject's teeth during their regular oral care routine, facilitating longitudinal monitoring of oral health. Thirdly, it allows for the capture of images of the subject's teeth in a consistent and standardized manner, which can improve the reliability of the tooth localization process.

In some cases, the Intra-Oral Scanner 300 may be configured to capture images of the subject's teeth under different lighting conditions, such as white light, Quantitative Light-induced Fluorescence (QLF), and Fluorescence Imaging with Reflectance Enhancement (FIRE) imaging mode. This can enhance the visibility of different oral features, such as plaque and tartar, and facilitate their detection and localization.

For example, in a QLF mode, a blue LED light source may be used to illuminate the teeth, and a band pass filter may be placed in front of the camera to block the blue excitation light. This allows the auto-fluorescence of plaque on the teeth to be imaged, providing valuable information about the presence and location of plaque on the teeth. In a FIRE imaging mode, QLF is combined with white light illumination to illuminate the gum (because it does not light up fluorescently), providing a comprehensive view of the teeth and the gum. In FIRE mode, the teeth are visible in green, while plaque and tartar can be seen in red or orange. This mode can provide valuable information about the presence and location of plaque and tartar on the teeth, aiding in the assessment of the user's oral health.

In some cases, the Intra-Oral Scanner 300 may be configured to capture images of the subject's teeth at different angles and orientations, allowing for comprehensive coverage of each tooth. This can enhance the accuracy of the tooth localization process by providing multiple views of each tooth for comparison with the reference images.

Also provided at the distal end of the arm 312, adjacent the optical sensor 306, is an IMU 216. The IMU 216 is configured to measure the acceleration and angular velocity of the oral care device, providing detailed information about the device's location and/or movement patterns.

The system 200 is integrated within the handle section 310. The input interface 210 of the system is positioned near the top of the handle section 310, to receive data from the image capture device 306. Below the input interface 210 is the processor 220, which is responsible for analysing the data. The controller 230 of the system is situated at the bottom of the handle 300.

Connections link both the image capture device 306 and IMU 216 to the input interface 210, the input interface 210 to the processor 220, and the processor 220 to the controller 230. The connections thus facilitate the flow of data and signals within the system 200.

The arrangement of components within the oral care device 300 allows for efficient data processing and control of the image capture device 306 according to the proposed concept(s). The input interface 210 receives data from the image capture device 306 and IMU 216, the processor 220 analyses this data, and the controller 230 generate appropriate signals based on the result(s) of the analysis.

The oral care device 300 integrates imaging capabilities with motion and position sensing. The scanner head 304 allows for intraoral imaging, while the IMU 216 can detect device motion and orientation. The internal components in the handle section 310 process data and control image capture, enabling automated tooth localization.

Modifications to the aforementioned embodiments may be implemented.

For example, in some embodiments, the oral care device 300 may be configured to provide feedback to the subject during the routine scan. This feedback may include visual indicators, audio signals, or haptic feedback to guide the subject in moving the device over their teeth. The feedback may also include real-time information about the oral health conditions detected in the scan images, such as the presence and location of plaque or tartar on the teeth. This real-time feedback may help the subject to improve their oral care routine and maintain their oral health.

In some embodiments, multiple calibration scans may be performed to validate the first calibration and improve the image similarity AI model. For instance, a second calibration scan may be performed at a different time than the first calibration scan. The second calibration scan may be used to validate the results of the first calibration scan, ensuring that the teeth scanned in the second calibration scan can be matched to the teeth images seen in the first calibration scan. This approach may increase the chances of correct re-identification and test the strength of the algorithms. Furthermore, the data collected from the second calibration scan may be used to improve or re-train the image similarity AI model, potentially improving the accuracy of tooth localization in subsequent scans. It may also be used to track changes of time and/or make matching more robust/resilient to teeth shape changes over time.

Also, in some embodiments, extracted tooth descriptors may be used to detect edge cases where the system may not work reliably. For instance, the tooth descriptors may be used to detect if the teeth shape belongs to an edge case, such as a jaw with braces, implants, or a double row of teeth. If such an edge case is detected, the user may be provided with a message indicating that the system may not work reliably for them due to their specific condition or orthodontic issues. This feature may help to prevent inaccurate tooth localization and ensure that the user receives accurate and reliable oral health information.

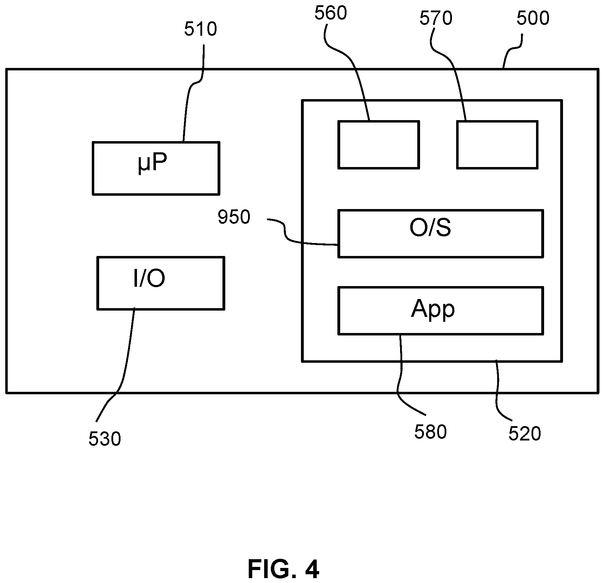

Fig. 4 illustrates an example of a computer 500 within which one or more parts of an embodiment may be employed. Various operations discussed above may utilize the capabilities of the computer 500. In this regard, it is to be understood that system functional blocks can run on a single computer or may be distributed over several computers and locations (e.g. connected via internet).

The computer 500 includes, but is not limited to, PCs, workstations, laptops, PDAs, palm devices, servers, storages, and the like. Generally, in terms of hardware architecture, the computer 500 may include one or more processors 510, memory 520 and one or more I/O devices 530 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 510 is a hardware device for executing software that can be stored in the memory 520. The processor 510 can be virtually any custom made or commercially available processor, a central processing unit (CPU), a digital signal processor (DSP), or an auxiliary processor among several processors associated with the computer 500, and the processor 510 may be a semiconductor-based microprocessor (in the form of a microchip) or a microprocessor.

The memory 520 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 520 may incorporate electronic, magnetic, optical, and/or other types of storage media. Note that the memory 520 can have a distributed architecture, where various components are situated remote from one another, but can be accessed by the processor 510.

The software in the memory 520 may include one or more separate programs, each of which comprises an ordered listing of executable instructions for implementing logical functions. The software in the memory 520 includes a suitable operating system (O/S) 550, compiler 560, source code 570, and one or more applications 580 in accordance with exemplary embodiments. As illustrated, the application 580 comprises numerous functional components for implementing the features and operations of the exemplary embodiments. The application 580 of the computer 500 may represent various applications, computational units, logic, functional units, processes, operations, virtual entities, and/or modules in accordance with exemplary embodiments, but the application 580 is not meant to be a limitation.

The operating system 550 controls the execution of other computer programs, and provides scheduling, input-output control, file and data management, memory management, and communication control and related services. It is contemplated by the inventors that the application 580 for implementing exemplary embodiments may be applicable on all commercially available operating systems.

Application 580 may be a source program, executable program (object code), script, or any other entity comprising a set of instructions to be performed. When a source program, then the program is usually translated via a compiler (such as the compiler 560), assembler, interpreter, or the like, which may or may not be included within the memory 520, so as to operate properly in connection with the O/S 550. Furthermore, the application 580 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 530 may include input devices such as, for example but not limited to, a mouse, keyboard, scanner, microphone, camera, etc. Furthermore, the I/O devices 530 may also include output devices, for example but not limited to a printer, display, etc. Finally, the I/O devices 530 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 530 also include components for communicating over various networks, such as the Internet or intranet.

If the computer 500 is a PC, workstation, intelligent device or the like, the software in the memory 520 may further include a basic input output system (BIOS) (omitted for simplicity). The BIOS is a set of essential software routines that initialize and test hardware at start-up, start the O/S 550, and support the transfer of data among the hardware devices. The BIOS is stored in some type of read-only-memory, such as ROM, PROM, EPROM, EEPROM or the like, so that the BIOS can be executed when the computer 500 is activated.

When the computer 500 is in operation, the processor 510 is configured to execute software stored within the memory 520, to communicate data to and from the memory 520, and to generally control operations of the computer 500 pursuant to the software. The application 580 and the O/S 550 are read, in whole or in part, by the processor 510, perhaps buffered within the processor 510, and then executed.

When the application 580 is implemented in software it should be noted that the application 580 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 580 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The embodiments of the Figures may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for tooth localization, the method comprising:
obtaining a set of reference images of the subject's teeth, each reference image comprising an image of a respective tooth of the subject at a known tooth location;
obtaining a set of scan images of the subject's teeth, the scan images being captured during performance of an oral scanning routine on the subject, and each scan image comprising an image of a respective tooth of the subject;
calculating measures of similarity of set of the scan images with the set of reference images; and
identifying a tooth of a scan image based on the calculated measures of similarity

2. The method of claim 1, wherein obtaining a set of reference images comprises:
performing a calibration scan of the subject's teeth to obtain a set of reference images of the subject's teeth.

3. The method of claim 2, wherein the calibration scan is performed with guidance to obtain reference images of each tooth of the subject with known locations.

4. The method of any of claims 1 to 3, wherein the oral scanning routine is performed without guidance.

5. The method of any of claims 1 to 4, wherein calculating measures of similarity comprises:
using an artificial intelligence, AI, model to map tooth images from the reference images and the scan images to embedding vectors; and
calculating similarity scores between the embedding vectors of the reference images and the scan images.

6. The method of claim 5, further comprising using a Hungarian algorithm to match scan images to reference images based on the calculated similarity scores.

7. The method of claim 5 or 6, wherein the AI model is trained using a self-supervised method to measure similarity between tooth images.

8. The method of claim 7, wherein the self-supervised method comprises a Siamese learning procedure with a contrastive loss function.

9. The method of any of claims 1 to 8, wherein at least one of the set of reference images and the set of scan images acquired by oral care device having an image capture device adapted to capture images of one or more oral features of the subject.

10. A computer program product for tooth localization, the computer program product comprising a computer-readable storage medium having program instructions embodied therewith, the program instructions executable by a processor to cause the processor to perform a method comprising:
obtaining a set of reference images of the subject's teeth, each reference image comprising an image of a respective tooth of the subject at a known tooth location;
obtaining a set of scan images of the subject's teeth, the scan images being captured during performance of an oral scanning routine on the subject, and each scan image comprising an image of a respective tooth of the subject;
calculating measures of similarity of set of the scan images with the set of reference images; and
identifying a tooth of a scan image based on the calculated measures of similarity

11. A system for tooth localization, the system comprising:
an interface configured to obtain a set of reference images of the subject's teeth, each reference image comprising an image of a respective tooth of the subject at a known tooth location, and to obtain a set of scan images of the subject's teeth, the scan images being captured during performance of an oral scanning routine on the subject, and each scan image comprising an image of a respective tooth of the subject;
a processor arrangement configured to calculate measures of similarity of set of the scan images with the set of reference images; and
a controller configured to generate a signal identifying a tooth of a scan image based on the calculated measures of similarity.

12. The system of claim 11 wherein the interface comprises an image capture device adapted to capture images of one or more oral features of the subject.

13. The system of claim 11 or 12, wherein the processor arrangement is configured to use an artificial intelligence, AI, model to map tooth images from the reference images and the scan images to embedding vectors, and to calculate similarity scores between the embedding vectors of the reference images and the scan images.

14. The system of claim 13, wherein the AI model is trained using a self-supervised method to measure similarity between tooth images

15. An oral care device comprising: an image capture device adapted to capture images of one or more oral features of a user; and a system according to any of claims 11 to 14, and optionally wherein the oral care device comprises an Intra-Oral Scanner.
